# EUROPEAN PATENT APPLICATION

(11) **EP 2 450 610 A1**
(43) Date of publication of application: **09.05.2012**
(21) Application number: 11008660.0
(22) Date of filing: 28.10.2011
(51) Int. Cl.: F16L 41/02, F16L 47/02

(54) **Method for providing a branch in a conduit made of thermoplastic polymeric material, while a fluid is running in the conduit**

(30) Priority: 03.11.2010 IT VI20100294
(71) Applicant: RITMO S.p.A., 35037 Teolo (PD) (IT)
(72) Inventor: Bortoli, Renzo, 35038 Torreglia (Padova) (IT)
(74) Representative: Forattini, Amelia

(57) **Abstract**

A method for providing a branch in a conduit made of thermoplastic polymeric material, while a fluid is running in the conduit, including the following steps: preparing for welding one end of a connector with an inside diameter that is substantially equivalent to the inside diameter of the conduit; preparing for welding the outer surface of the conduit; positioning the end of the connector prepared for welding in contact with the outer surface of the conduit prepared for welding; depositing a welding bead along the region of mutual contact between the end of the connector prepared for welding and the outer surface of the conduit prepared for welding; checking the tightness of the welding bead; providing an opening on the conduit, the opening being internal to the connector and with a diameter that is substantially equivalent to the inside diameter of the conduit.

## Description

The present invention relates to a method for providing a branch in a conduit made of thermoplastic polymeric material, while a fluid is running in the conduit.

As is known, conduits made of thermoplastic polymeric material (polyethylene, polypropylene, polyvinyl chloride, etc.) are an extremely valid alternative to pipes made of traditional materials such as steel, cast iron, cement, etc. Therefore, currently, plastic conduits are probably the most widely used gasses and are also more and more used for water mains.

This success is due mainly to a series of technical features, such as an excellent resistance to pressure, impermeableness to gases, resistance to oxidation and to aggressive chemicals and others.

Also, pipes made of synthetic material also have unarguably economic advantages given by their considerable versatility and light weight, which facilitates their transport and handling, and given to the fact that plastic pipes are flexible and allows to wind the pipes in coils, thus reducing storage space and the number of joints during installation.

In view of the great diffusion of thermoplastic resin pipes, the need to intervene on networks made of this material to replace portions of pipes, to extend conduits, to insert joints and/or valves, and so forth, is becoming increasingly frequent.

In view of interventions of this type, it becomes very important to avoid interrupting delivery of water or gas, in order to avoid both inconvenience for users and difficulties linked to resumption of service.

In this regard, one generally resorts to the use of equipment that allows to disconnect the mains while keeping the delivery constant and ensuring at the same time the necessary safety conditions for the operators.

In general, the operators apply one or more tapping connectors to the main conduit and then connect the bypasses and/or branches to the tapping connectors, after blocking the flow of the fluid in the portion to be excluded by means of adapted flow control systems.

A tapping connector commonly used is constituted by a collar that can be welded electrically and is formed by two semicylindrical portions which can be mutually associated and is provided with a right-angled branch.

Although they are advantageous in many respects, and substantially comply with the aim, connectors of the prior art have various drawbacks.

A first drawback is the presence of an electrical resistor embedded in the collar and also, the fact that the weld must completely surround the base of the branch and must be rather wide so as to ensure tightness even with medium-high pressures. The above combined features considerably limit the useful dimensions of the branch.

Accordingly, in case of intervention on conduits made of thermoplastic polymeric material, it may be practically impossible to use the flow control devices already commercially available and commonly used for metal pipes, and it is often necessary to resort to dedicated systems, with inevitable repercussions on the final costs of the intervention.

Also, the costs are further increased by the inherent onerousness of the tapping collars that are currently used and by the relative complexity and labor-intensiveness of the installation.

US-3406055 discloses a method for welding cured polymeric compositions, namely pipes. Such method is adapted to form a diversion in a water pipe which is not in use and requires the interruption of the delivery of water. The method shows no provisions for attaching the branch to a system where water is running.

US-3654008 discloses a method for manufacturing a plastic t-assembly for use with plastic irrigation pipes. Such method cannot be employed for providing a branch to a working water system, i.e. a system with water running in it.

The aim of the present invention is to solve the problems described above, by a reliable, easy and economic method for providing a branch on a pressurized conduit made of thermoplastic polymeric material.

Within the scope of this aim, a particular object of the invention is provide a method that allows the branches of thermoplastic polymeric material thus obtained, to use the flow control devices that are already commercially available, and are commonly used for metal pipes.

Another object of the invention is to provide a method that provides branches which are safe in terms of tightness.

Another object of the invention is to provide a method that allows to perfect the joint between the main duct and the branch also subsequently.

Another object of the invention is to provide a method that can be applied easily, so as to reduce the costs and production times of branch stubs from pressurized ducts.

This aim, these objects and others that will become better apparent hereinafter are achieved by a method for providing a branch in a conduit made of thermoplastic polymeric material, while a fluid is running in said conduit, characterized in that it comprises the following steps:
- preparing for welding one end of a connector with an inside diameter that is substantially equivalent to the inside diameter of said conduit;
- preparing for welding the outer surface of said conduit;
- positioning the end of said connector prepared for welding in contact with the outer surface of said conduit prepared for welding;
- depositing a welding bead along the region of mutual contact between the end of said connector prepared for welding and the outer surface of said conduit prepared for welding;
- checking the tightness of said welding bead;
- providing an opening on said conduit, said opening being internal to said connector and with a diameter that is substantially equivalent to the inside diameter of said conduit.

Further characteristics and advantages will become better apparent from the description of a preferred but not exclusive embodiment of a method according to the invention, illustrated by way of non-limiting example in the accompanying drawings, wherein:

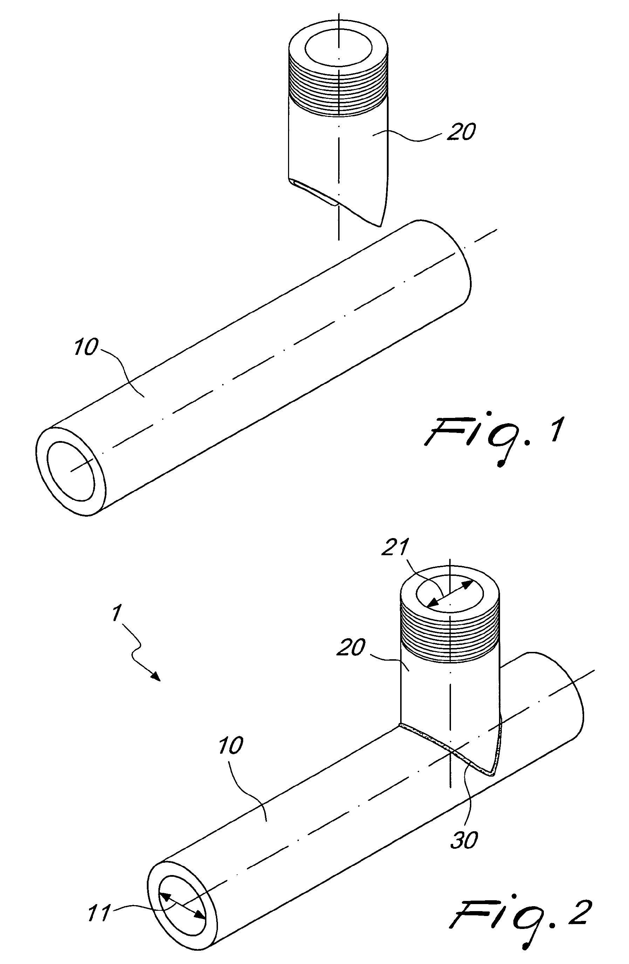

Figure 1 is an exploded perspective view of a plastic tee according to the invention;
Figure 2 is a perspective view of the tee according to the invention;

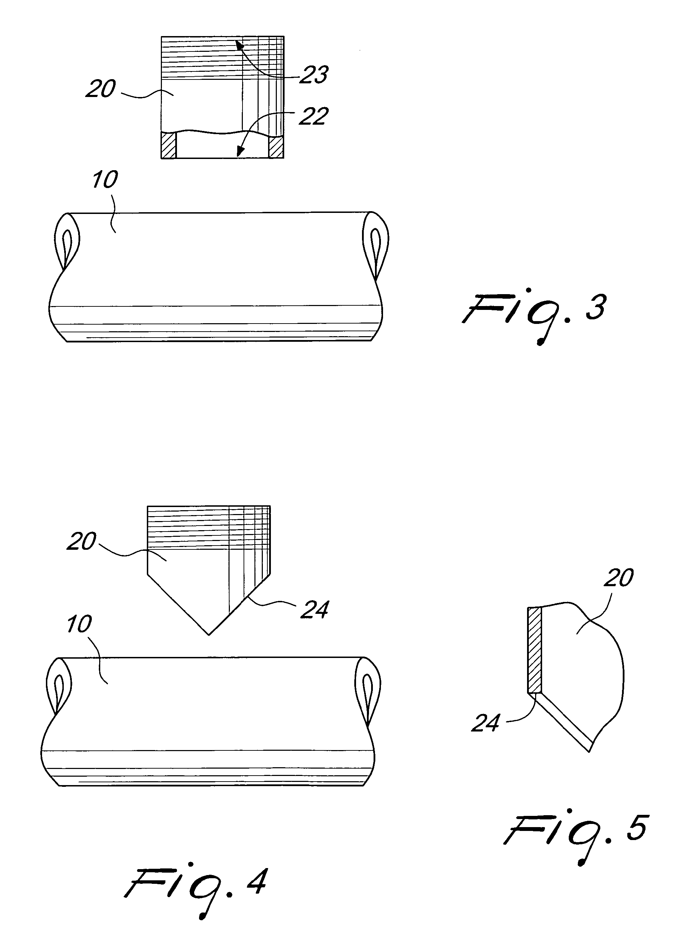

Figure 3 is a partially sectional exploded side view of the tee according to the invention;
Figure 4 is a side view showing a first step of the method according to the invention;
Figure 5 is a partially sectional side view of a detail of figure 4;

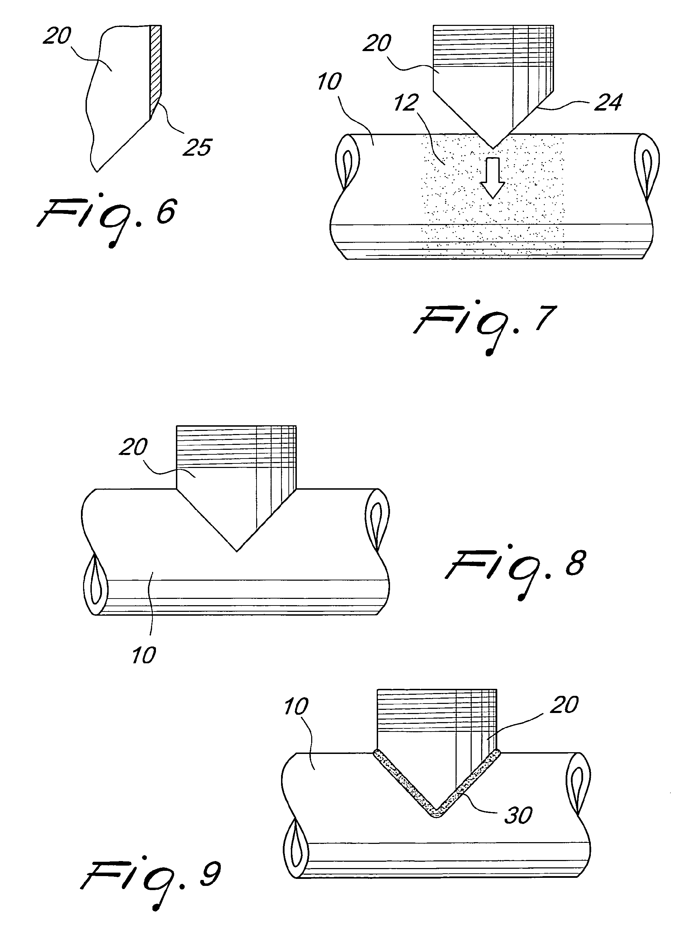

Figure 6 is a partially sectional side view of a detail of Figure 4, after further working;
Figure 7 is a side view showing a further step of the method according to the invention;
Figure 8 is a side view showing still a further step of the method according to the invention;
Figure 9 is a side view showing the tee after a further step of the method according to the invention;

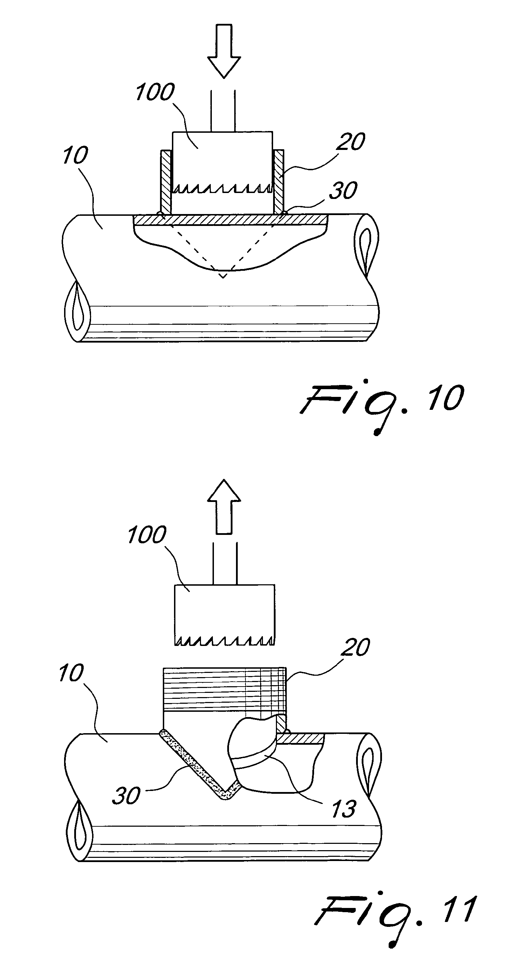

Figure 10 is a partially sectional side view showing a further step of the method according to the invention;
Figure 11 is a partially sectional side view of the tee showing a final step of the method according to the invention.

With reference to the cited figures, a tee connection, generally designated by the reference numeral 1, is essentially formed by a connector 20 and by a main conduit 10 which are made of thermoplastic polymeric material, such as for example polyethylene, polypropylene, polyvinyl chloride, etc.

The connector 20 is connected transversely to the main conduit 10 by using the method described hereinafter.

The inside diameter 21 of the connector 20 substantially corresponds to the inside diameter 11 of the main conduit 10.

This feature allows, in case of mains disconnection, to use for the main conduit 10 a flow control device which is already used commonly for metal pipes without any type of adaptation.

It should also be considered that during the application of the connector 20 the main conduit 10 maintains the operating pressure and is constantly connected to an aqueduct or a methane pipeline, which are not shown in the drawings.

The end 22 of the connector 20, to be mated to the main conduit 10, is prepared for welding.

The connector 20 is preferably constituted by a transition connector, i.e., it is formed by a stub of thermoplastic polymeric material and by a metal stub provided with a connection terminal, which is provided with flanges or is threaded. Such metal stub is associated with an end 23 of the thermoplastic stub that lies opposite the end 22.

The end 22 is firstly shaped by forming an edge 24 which lies along a substantially saddle-shaped three-dimensional curve.

Subsequently, the peripheral portion of the edge 24 is beveled so as to obtain a bevel 25 that facilitates the subsequent welding operations, ensuring good penetration of the molten material and a correct positioning of the welded joint.

A second step of the method comprises preparing the outer face of the main conduit 10 for welding, by means of a scraping operation. This operation, which is preferably performed uniformly, preferably affects a region 12 that is larger than the welding area, and helps remove the superficial oxide layer that is present on the outer faces of the pipes.

Although it has been found that it is particularly advantageous to prepare the connector 20 first and then the main conduit 10, for welding, the order of these two operations may be inverted.

It should also be considered that if a semifinished connector 20, with the edge 24 already shaped and beveled, is used, the corresponding step of preparation for welding can be omitted, as will become apparent to the person skilled in the art.

When the main conduit 10 and the connector 20 are ready for welding, the end 22 of the connector 20 is placed in contact with the region 12.

At this point, the connector 20 can be joined to the main conduit 10 by depositing a welding bead 30, made of thermoplastic polymeric material, which lies along a substantially saddle-shaped three-dimensional path.

For this purpose it is possible to use advantageously a portable extruder, of a per se known type.

As an alternative, the weld can be provided by means of a hot air gun blower and adapted welding rods.

The welding bead is then checked fully in order to detect any defects in the weld and in the adjacent thermally altered region.

Advantageously, the tightness of the weld can be verified by pressurizing the connector 20 and analyzing the trend of the pressure in order to measure any decay thereof over time.

Finally, an opening 13 is providing on the wall of the main conduit 10. The opening 13 is arranged inside the connector 20 and is shaped so that its diameter substantially corresponds to the inside diameter of the main conduit 10 and of the connector 20.

The opening 13 is preferably made by means of a hollow cutter 100 with which a flow control system of a known type is equipped.

From what has been described above it is evident that both the steps for preparing for welding and the steps for welding and milling are extremely simplified and repeatable, with undeniable advantages in terms of work costs and times.

Moreover, in tee connections provided according to the method of the invention, flow control devices already commonly used for metal pipes can be used also for pipes made of thermoplastic polymeric material.

This application claims the priority of Italian Patent Application No. Vl2010A000294, filed on November 3, 2010, the subject matter of which is incorporated herein by reference.

## Claims

1. A method for providing a branch in a conduit made of thermoplastic polymeric material, while a fluid is running in said conduit, **characterized in that** it comprises the following steps:
- preparing for welding one end of a connector with an inside diameter that is substantially equivalent to the inside diameter of said conduit;
- preparing for welding the outer surface of said conduit;
- positioning the end of said connector prepared for welding in contact with the outer surface of said conduit prepared for welding;
- depositing a welding bead along the region of mutual contact between the end of said connector prepared for welding and the outer surface of said conduit prepared for welding;
- checking the tightness of said welding bead;
- providing an opening on said conduit, said opening being internal to said connector and with a diameter that is substantially equivalent to the inside diameter of said conduit.

2. The method according to the preceding claim, **characterized in that** said conduit, said connector and said welding bead are made of thermoplastic polymeric material.

3. The method according to one or more of the preceding claims, **characterized in that** said welding bead is provided by means of a portable extruder.

4. The method according to one or more of the preceding claims, **characterized in that** said welding bead is substantially saddle-shaped.

5. The method according to one or more of the preceding claims, **characterized in that** said step of preparing for welding an end of a connector comprises the following operations:
- shaping the end of said connector to be mated to said conduit so that it is substantially saddle-shaped;
- beveling the edge of the end of said connector that can be mated to said conduit.

6. The method according to one or more of the preceding claims, **characterized in that** said step of preparing for welding the outer surface of said conduit comprises the operation of scraping said surface substantially at the portion to be mated to said connector.

7. The method according to one or more of the preceding claims, **characterized in that** the end of said connector that lies opposite the end to be mated to said conduit comprises a junction terminal.

8. The method according to one or more of the preceding claims, **characterized in that** said step of checking the tightness of said welding bead comprises the following operations:
- pressurizing said connector;
- analyzing the trend of the pressure inside said connector in order to measure any decay thereof over time.
